# FASCICULE DE BREVET EUROPEEN

(11) **EP 2 410 202 B1**
(45) Date de publication et mention de la délivrance du brevet: **21.08.2013**
(21) Numéro de dépôt: 11172145.2
(22) Date de dépôt: 30.06.2011
(51) Int. Cl.: F16F 7/12, B64D 27/26

(54) **Dispositif de liaison destiné à relier un premier corps à un second corps, notamment pour ensemble moteur d'aéronef**
Vorrichtung zum Verbinden eines ersten Körpers mit einem zweiten Körper, insbesondere einsetzbar für die Befestigung eines Flugzeugtriebwerks
Linking device intended for connecting a first body to a second body, in particular for an aircraft engine assembly

(30) Priorité: 22.07.2010 FR 1056016
(43) Date de publication de la demande: 25.01.2012
(73) Titulaire: Airbus Operations, 31060 Toulouse (FR)
(72) Inventeur: Bonnet, Mathieu, 31000 TOULOUSE (FR); Valery, Benoît, 31140 Saint Albain (FR)
(74) Mandataire: Santarelli

(56) Documents cités:
- DE-A1- 19 616 944
- FR-A1- 2 599 793
- FR-A1- 2 920 178
- US-A- 6 029 456

## Description

La présente invention concerne un dispositif de liaison destiné à relier un premier corps à un second corps.

Plus particulièrement, et de manière non limitative, ce dispositif de liaison peut faire partie d'éléments structurels destinés à relier un moteur d'un aéronef à la structure de cet aéronef, et par exemple à un mât d'accrochage de l'aéronef.

De tels éléments structurels doivent supporter des charges statiques très lourdes, tout en réduisant au maximum les vibrations mécaniques transmises entre les corps reliés par le dispositif de liaison.

On connaît pour réduire des vibrations l'utilisation de ressorts pneumatiques, utilisant de l'air ou un autre gaz, tel que l'azote par exemple, pour agir sur un élément élastique.

Toutefois, ce type d'amortisseur à ressorts pneumatiques nécessite des structures d'introduction et d'étanchéité de gaz complexes à mettre en oeuvre.

On connaît également des dispositifs de liaison comprenant des amortisseurs en caoutchouc ou élastomère.

Toutefois, un tel amortisseur en matériau élastomère nécessite l'utilisation d'une quantité de matière importante, augmentant ainsi le poids du dispositif de liaison, au-delà parfois des contraintes admissibles pour équiper une structure d'aéronef.

Par ailleurs, les amortisseurs à élastomère peuvent être affectés par une modification des propriétés des matériaux utilisés, par fluage, déformation ou fatigue, de telle sorte que leur caractéristique d'amortissement varie dans le temps.

Le document DE 196 16 944 divulgue un amortisseur comprenant un amortisseur réversible et un amortisseur irréversible emboîtés l'un dans l'autre autour d'un axe longitudinal commun.

La présente invention a pour but de proposer un dispositif de liaison permettant de créer une liaison souple entre deux corps à relier l'un à l'autre, permettant d'amortir les vibrations grâce à une structure mécanique particulière.

A cet égard, la présente invention concerne un dispositif de liaison d'un premier corps à un second corps, comprenant :
- un premier élément ayant une extrémité de liaison adaptée à être liée au premier corps et comportant une première portion tubulaire s'étendant selon un axe longitudinal ; et
- un second élément ayant une extrémité de liaison adaptée à être liée au second corps et comportant une deuxième portion tubulaire s'étendant selon l'axe longitudinal, dans la première portion tubulaire du premier élément.
- au moins une portion tubulaire complémentaire s'étendant selon l'axe longitudinal, dans la première portion tubulaire et autour de la deuxième portion tubulaire.
- la première portion tubulaire et ladite deuxième portion tubulaire étant solidarisées aux extrémités par la portion tubulaire complémentaire.

Selon l'invention, afin d'obtenir des portions tubulaires de rigidité uniforme, la première portion tubulaire, la deuxième portion tubulaire, et la portion tubulaire complémentaire présentent dans une section transversale à l'axe longitudinal, une surface de valeur identique.

En particulier, les portions tubulaires emboîtées ayant des diamètres différents, l'épaisseur de chaque tube sera variable de manière à obtenir une surface de valeur identique dans la section transversale de chaque tube.

Ainsi, grâce à un emboitement d'au moins trois portions tubulaires les unes dans les autres, solidarisées les unes aux autres, une liaison souple entre les corps à relier est réalisée.

En effet, dans un dispositif de liaison d'un premier corps à un second corps par une structure tubulaire, la longueur de la partie tubulaire définit la rigidité (ou a contrario la souplesse) du dispositif de liaison.

Ainsi, plus la longueur du tube formant le dispositif de liaison est importante, plus celui-ci sera souple et adapté à filtrer les vibrations entre le premier et le second corps reliés par le dispositif de liaison.

Grâce à l'emboitement d'au moins trois portions tubulaires du dispositif de liaison, il est possible d'obtenir un dispositif de liaison de longueur plus courte, dont la rigidité (ou souplesse) est équivalente à une structure tubulaire dont la longueur correspondrait à l'addition des longueurs des portions tubulaires emboitées les unes dans les autres.

Ainsi, le dispositif de liaison selon l'invention permet de manière compacte de former un dispositif de liaison avec une fonction d'amortissement des vibrations entre les corps reliés par ce dispositif de liaison.

Selon un mode préféré de réalisation, le dispositif de liaison comprend plusieurs portions tubulaires complémentaires emboîtées les unes dans les autres, lesdites première portion tubulaire, deuxième portion tubulaire et portions tubulaires complémentaires étant solidarisées respectivement deux à deux.

En multipliant le nombre de portions tubulaires emboitées les unes dans les autres et solidarisées aux extrémités les unes des autres, il est possible d'augmenter la longueur équivalente du dispositif de liaison pour accroitre la souplesse de ce dispositif de liaison dans la filtration des efforts mécaniques entre les premier et second corps.

L'invention concerne également un ensemble composé d'un premier corps, d'un second corps et d'un dispositif de liaison du premier corps au second corps, le dispositif de liaison comprenant en outre une pièce de liaison rigide du premier corps au second corps, la pièce de liaison rigide étant fixée en deux points d'attache respectivement aux premier et second corps, l'un des premier et second corps étant relié par une liaison mécanique avec un jeu fonctionnel au niveau d'un des deux points d'attache de la pièce de liaison rigide.

Ainsi, la pièce de liaison rigide peut reprendre les efforts entre le premier corps et le second corps au-delà d'une charge limite de manière à assurer une liaison rigide du premier corps au second corps au-delà d'une charge de valeur prédéterminée.

Ainsi, tant que les charges appliquées au niveau du dispositif de liaison restent inférieures à la charge de valeur prédéterminée, correspondant par exemple à des charges fatigues, seuls le premier élément et le second élément du dispositif de liaison transmettront les efforts, avec une filtration des vibrations grâce au montage souple des portions tubulaires emboitées.

Lorsque les charges exercées sur le dispositif de liaison dépassent la charge de valeur prédéterminée, le jeu fonctionnel prévu au niveau de la liaison mécanique entre l'un des premier et second corps et l'un des points d'attache de la pièce de liaison rigide sera comblé de telle sorte qu'il n'y a plus de déplacement relatif possible entre la pièce de liaison rigide et les premier et second corps reliés par le dispositif de liaison.

La pièce de liaison rigide reprendra ainsi la quasi intégralité des efforts à transmettre entre le premier corps et le second corps.

Dans un mode de réalisation de l'invention, la pièce de liaison rigide de l'ensemble composé d'un premier corps, d'un second corps et d'un dispositif de liaison du premier corps au second corps comprend au moins deux pièces planes rigides s'étendant de part et d'autre des premier et second éléments, selon l'axe longitudinal.

Ces pièces planes rigides, également appelées à des manilles, permettent d'encadrer la structure de portions tubulaires emboitées pour reprendre les efforts au-delà des charges fatigues et assurer une liaison rigide entre le premier corps et le second corps.

Dans un autre mode de réalisation, la pièce de liaison rigide de l'ensemble composé d'un premier corps, d'un second corps et d'un dispositif de liaison du premier corps au second corps comporte un tube s'étendant selon l'axe longitudinal autour des premier et second éléments.

Un tel tube, également appelé bielle, permet de répartir uniformément les efforts dans le dispositif de liaison autour de l'axe longitudinal de ce dispositif de liaison.

Selon un second aspect, l'invention concerne un ensemble moteur pour aéronef, comprenant un mât d'accrochage et un moteur monté sur le mât au moyen d'un dispositif de liaison conforme à l'invention.

La présente invention concerne également un aéronef comprenant au moins un ensemble moteur tel que défini ci-dessus.

L'ensemble moteur pour aéronef et l'aéronef présentent des caractéristiques et avantages analogues à ceux décrits en relation avec le dispositif de liaison conforme à l'invention.

D'autres particularités et avantages de l'invention apparaîtront encore dans la description ci-après.

Aux dessins annexés, donnés à titre d'exemples non limitatifs :
- la figure 1 est une vue schématique illustrant un ensemble moteur pour aéronef selon un mode de réalisation de l'invention ;
- la figure 2 est une vue en perspective d'un dispositif de liaison conforme à un mode de réalisation de l'invention ;
- la figure 3 est une vue en coupe longitudinale du dispositif de liaison de la figure 2, les charges appliquées étant inférieures aux charges fatigues ; et
- la figure 4 est une vue analogue à la figure 3, les charges appliquées dépassant les charges fatigues.

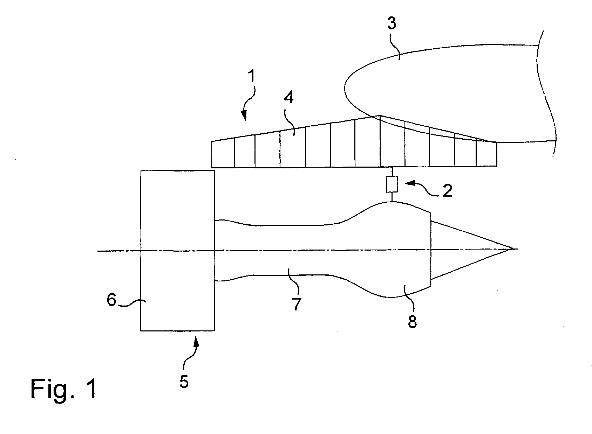

On va décrire tout d'abord en référence à la figure 1 un exemple de réalisation d'un dispositif de liaison 2 appliqué à un ensemble moteur 1 pour aéronef.

L'ensemble moteur 1 pour aéronef est par exemple ici destiné à être fixé sous une aile 3 de cet aéronef, cet ensemble moteur 1 comprenant un mât d'accrochage 4 et un moteur tel qu'un turboréacteur 5.

Un dispositif de liaison 2 permet de monter le turboréacteur 5 au niveau du mât d'accrochage 4.

Bien entendu, le dispositif de liaison 2 pourrait aussi être appliqué dans une configuration dans laquelle les moteurs sont montés à l'arrière du fuselage.

Dans l'exemple illustré à la figure 1, le turboréacteur 5 comprend à l'avant un carter de soufflante 6 de grandes dimensions, prolongé vers l'arrière d'un carter central 7 de plus petites dimensions, renfermant le coeur de ce turboréacteur 5.

Enfin, le carter central 7 se prolonge vers l'arrière par un carter d'éjection 8 de plus petites dimensions que celles du carter de soufflante 6.

Ici, le dispositif de liaison 2 est adapté à solidariser le turboréacteur 5 au mât d'accrochage 4 au niveau du carter d'éjection 8.

Cette structure d'ensemble moteur ne sera pas décrite plus en détails ici car bien connue de l'homme du métier.

Par ailleurs, l'invention n'est pas limitée à l'exemple d'application d'un dispositif de liaison 2 reliant un turboréacteur 5 au mât d'accrochage 4.

Le dispositif de liaison peut aussi être utilisé pour relier le mât d'accrochage au fuselage d'un aéronef.

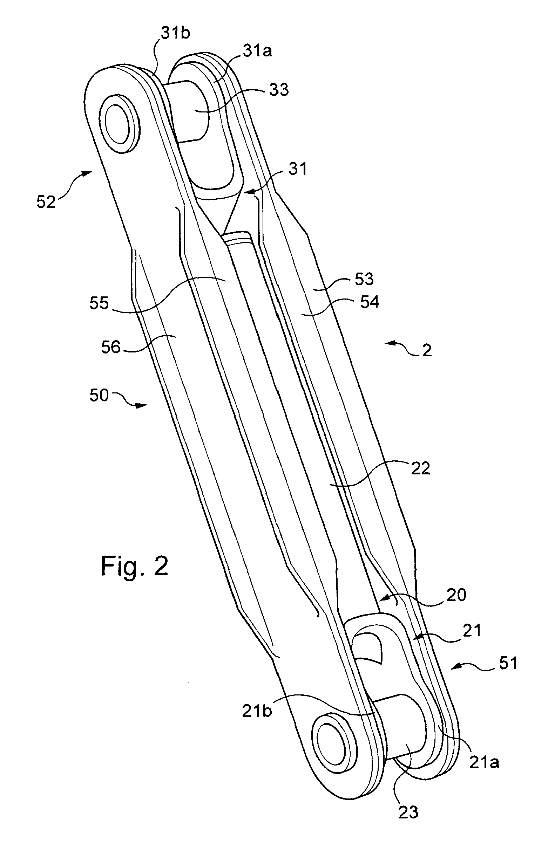

On va décrire à présent en référence aux figures 2 à 4 un exemple détaillé d'un mode de réalisation du dispositif de liaison 2 tel qu'appliqué par exemple à la figure 1.

Dans sa généralité, ce dispositif de liaison 2 comprend un premier élément 20 ayant une extrémité de liaison 21 adaptée à être reliée à un premier corps, et ici par exemple à un mât d'accrochage 4.

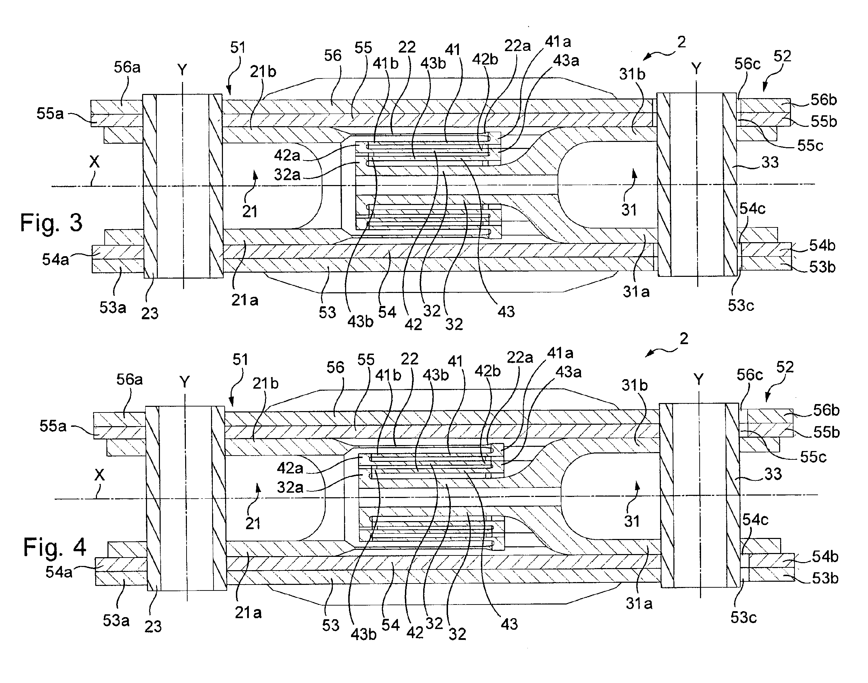

Comme bien illustré sur les figures 3 et 4 en vue en coupe longitudinale, ce premier élément 20 comporte une première portion tubulaire 22 s'étendant selon un axe longitudinal X du dispositif de liaison.

L'extrémité de liaison 21 du premier élément 20 comprend une chape 21 adaptée au montage d'un axe d'articulation 23 avec le premier corps à relier, et ici à titre d'exemple le mât d'accrochage 4.

Cet axe d'articulation 23 s'étend ainsi entre les deux bras 21 a, 21 b de la chape 21 en forme de U constituant l'extrémité de liaison 21 du premier élément 20.

Par ailleurs, cet axe d'articulation 23 d'étend selon une direction Y, perpendiculaire à la direction de l'axe longitudinal X du dispositif de liaison.

Le dispositif de liaison comporte également un second élément 30 ayant également une extrémité de liaison 31 adaptée à être relier à un second corps, et ici à titre d'exemple au turboréacteur 5.

Ce second élément 30 comporte une deuxième portion tubulaire 32 s'étendant également selon l'axe longitudinal X du dispositif de liaison 2.

Comme bien illustré aux figures 3 et 4, cette deuxième portion tubulaire 32 s'étend dans la première portion tubulaire 22 du premier élément 20.

L'extrémité de liaison 31 du second élément 30 est également constituée d'une chape 31 adaptée au montage d'un axe d'articulation 33 avec le second corps 5.

Comme pour le premier élément, cet axe d'articulation 33 s'étend entre les bras 31 a, 31 b de la chape 31 en forme de U constituant l'extrémité de liaison 31.

Cet axe d'articulation 33 s'étend également selon une direction Y, perpendiculaire à la direction de l'axe longitudinal X du dispositif de liaison 2.

Bien entendu, le montage du premier élément 20 au mât d'accrochage 4 et du second élément 30 au moteur 5 peut être inversé.

Comme visible aux figures 3 et 4, la première portion tubulaire 22 et la deuxième portion tubulaire 32 sont solidarisées par plusieurs portions tubulaires complémentaires, emboitées les unes dans les autres.

Dans ce mode de réalisation, outre la première portion tubulaire 22 et la deuxième portion tubulaire 32, le dispositif de liaison 2 comporte trois portions tubulaires complémentaires 41, 42, 43.

Bien entendu, cet exemple de réalisation n'est pas limitatif, le dispositif de liaison 2 pouvant ne comporter qu'une seule portion tubulaire complémentaire ou deux portions tubulaires complémentaires ou un nombre supérieur à trois.

Quel que soit le nombre de portions tubulaires complémentaires emboitées les unes dans les autres, ces portions tubulaires s'étendent selon l'axe longitudinal X du dispositif de liaison 2, dans la première portion tubulaire 22 et autour de la deuxième portion tubulaire 32.

Comme bien illustré sur les figures 3 et 4, les portions tubulaires 22, 32, 41, 42, 43 sont solidarisées deux à deux.

Ainsi, l'extrémité libre 22a de la première portion tubulaire 22 est solidarisée à une première extrémité 41 a d'une troisième portion tubulaire 41.

La seconde extrémité 41 b de la troisième portion tubulaire 41 est à son tour solidarisée à une première extrémité 42a d'une quatrième portion tubulaire 42.

La seconde extrémité 42b de la quatrième portion tubulaire 42 est à son tour solidarisée à une première extrémité 43a d'une cinquième portion tubulaire 43.

La seconde extrémité 43b de la cinquième portion tubulaire 43 est à son tour solidarisée à l'extrémité libre 32a de la deuxième portion tubulaire 32 du second élément 30.

De préférence, ces portions tubulaires 22, 32, 41, 42, 43 sont réalisées en titane ou un alliage métallique à base de nickel, présentant des propriétés de rigidité appropriées.

L'ensemble des portions tubulaires 22, 32, 41, 42, 43 est solidarisé deux à deux par exemple par soudage des extrémités de ces portions tubulaires.

L'emboitement des portions tubulaires permet ainsi d'obtenir un dispositif de liaison compact présentant une rigidité (ou souplesse) équivalente à celle qui serait procurée par un tube dont la longueur correspondrait à la somme des longueurs des portions tubulaires emboitées 22, 32, 41, 42, 43.

Afin de respecter l'uniformité de rigidité dans l'ensemble des portions tubulaires emboitées, il est préférable que la première portion tubulaire 22, la deuxième portion tubulaire 32 et les portions tubulaires complémentaires 41, 42, 43 présentent dans une section transversale, c'est-à-dire dans le plan perpendiculaire à l'axe longitudinal X du dispositif de liaison 2, une surface S de valeurs identiques.

En effet, la rigidité K d'une portion tubulaire en traction ou compression est égale à :
K = ES/L
avec E : module de Young, S : aire de la section transversale de la portion tubulaire soumise aux efforts et L : longueur de la portion tubulaire.

Ainsi, les portions tubulaires emboitées 22, 32, 41, 42, 43 sont dimensionnées de manière à présenter une surface S de valeur identique dans la section transversale de chaque portion tubulaire.

En pratique, le diamètre de chaque portion tubulaire 22, 32, 41, 42, 43 étant variable (de plus en plus grand de la deuxième portion tubulaire 32 à la première portion tubulaire 22 en passant par les portions tubulaires complémentaires 43, 42, 41), l'épaisseur de chaque portion tubulaire 22, 32, 41, 42, 43 varie de manière inverse, et ainsi est de plus en plus mince de la deuxième portion tubulaire 32 à la première portion tubulaire 22 en passant par les portions tubulaires complémentaires 43, 42, 41.

A titre d'exemple non limitatif, le diamètre intérieur de chaque portion tubulaire 22, 32, 41, 42, 43 varie entre 5 mm et 50 mm.

Par exemple, le diamètre intérieur de la première portion tubulaire 22 varie entre 40 et 50 mm, le diamètre intérieur de la portion tubulaire complémentaire 43 varie entre 35 et 45 mm, le diamètre intérieur de la portion tubulaire complémentaire 42 varie entre 25 et 35 mm, le diamètre intérieur de la portion tubulaire complémentaire 41 varie entre 15 et 25 mm et le diamètre intérieur de la deuxième portion tubulaire 32 varie entre 5 et 15 mm.

A contrario, l'épaisseur de chaque portion tubulaire 22, 32, 41, 42, 43 varie de manière inverse, dans une plage comprise entre 1 mm et 5 mm.

Ainsi, à titre d'exemple non limitatif, l'épaisseur de la première portion tubulaire 22 est comprise entre 1 et 1,5 mm, l'épaisseur de la portion tubulaire complémentaire 43 est comprise entre 1,3 et 1,8 mm, l'épaisseur de la portion tubulaire complémentaire 42 est comprise entre 1,6 et 2,2 mm, l'épaisseur de la portion tubulaire complémentaire 41 est comprise entre 2,2 et 2,8 mm et l'épaisseur de la deuxième portion tubulaire 32 est comprise entre 4 et 5 mm.

Il est ainsi possible pour chaque portion tubulaire 22, 32, 41, 42, 43 de choisir un couple de valeurs pour le diamètre intérieur et l'épaisseur permettant d'obtenir une section, de forme annulaire dans le plan transversal de chaque portion tubulaire 22, 32, 41, 42, 43, ayant une surface de valeur sensiblement identique.

Par ailleurs, la longueur de chaque portion tubulaire est variable et dépend du type d'application et d'utilisation du dispositif de liaison.

Cette longueur peut être comprise entre 30 mm et 300 mm.

Dans l'exemple illustré, la longueur des portions tubulaires emboîtées 22, 32, 41, 42, 43 est sensiblement identique, et par exemple comprise entre 40 et 70 mm.

Bien entendu, l'invention n'est pas limitée à ce mode de réalisation et la longueur des portions tubulaires pourrait être différente les unes des autres.

Par exemple, la longueur de la première portion tubulaire 22 pourrait être supérieure à la longueur de la deuxième portion tubulaire 32, disposée à l'intérieur de la première portion tubulaire 22.

Par exemple, les portions tubulaires 22, 41, 42 pourraient présenter une longueur identique, comprise entre 200 et 300 mm et les portions tubulaires 43 et 32 pourraient présenter une longueur identique plus courte et comprise entre 60 et 100 mm.

Grâce à cet emboitement des portions tubulaires, le dispositif de liaison présente un comportement souple permettant de filtrer les vibrations transmises entre les corps 4, 5 reliés par le dispositif de liaison 2.

Dans l'application illustrée à la figure 1, le montage du turboréacteur 5 au mât d'accrochage 4 est source de vibrations en fonctionnement.

Le dispositif de liaison 2 permet ainsi de filtrer ou compenser une partie de ces vibrations grâce à la souplesse obtenue dans le système mécanique réalisé par l'emboitement des portions tubulaires par lesquelles transitent les efforts appliqués au dispositif de liaison 2.

Toutefois, un tel dispositif de liaison 2 doit également pouvoir maintenir la liaison entre les corps 4 et 5 même en cas de charges extrêmes appliquées sur ce dispositif de liaison 2.

A cet effet, comme bien illustré aux figures 2 à 4, le dispositif de liaison comprend également une pièce de liaison rigide 50 du premier corps, ici le mât d'accrochage 4, au second corps, ici le turboréacteur 5.

Cette pièce de liaison rigide 50 est fixée en deux points d'attache 51, 52 respectivement aux premier et second corps 4, 5.

Afin de conserver au dispositif de liaison la caractéristique de filtration des vibrations obtenue grâce à la structure de tubes emboités 22, 32, 41, 42, 43, les premier et second corps 4, 5 sont reliés par une liaison mécanique avec un jeu fonctionnel au niveau d'un des points d'attache 51, 52 de la pièce de liaison rigide 50.

Ainsi, grâce à la présence de ce jeu fonctionnel, tant que les efforts ou charges exercés sur le dispositif de liaison 2 restent inférieurs à une valeur prédéterminée, correspondant à des charges fatigues, les premier et second corps 4, 5 sont reliés par le dispositif de liaison 2 autorisant un déplacement relatif entre la pièce de liaison rigide 50 et la structure de tubes emboités 22, 32,41,42,43.

Ainsi, dans ce cas, la structure de tubes emboités 22, 32, 41, 42, 43 reprend l'ensemble des efforts transitant entre les deux corps 4, 5 reliés par le dispositif de liaison 2, en assurant, comme décrit précédemment, une filtration des vibrations présentes au niveau du dispositif de liaison 2.

En revanche, lorsque les charges appliquées sur le dispositif de liaison 2 dépassent les charges fatigues, jusqu'à atteindre des charges extrêmes, le jeu fonctionnel prévu au niveau de la liaison mécanique de la pièce de liaison rigide 50 est comblé de telle sorte qu'il n'existe plus de déplacement relatif entre la pièce de liaison rigide 50 et la structure de tubes emboités 22, 32,41,42,43.

Ainsi, la pièce de liaison rigide 50 et la structure de tubes emboités 22, 32, 41, 42, 43 vont reprendre les efforts au prorata de leur rigidité.

La pièce de liaison rigide 50 est structurée de manière à reprendre l'ensemble du flux des efforts entre les premier et second corps 4, 5 reliés par le dispositif de liaison 2 lorsque les charges appliquées à ce dispositif de liaison 2 dépassent la valeur prédéterminée correspondant aux charges fatigues.

Dans le mode de réalisation illustré aux figures 2 à 4, la pièce de liaison rigide 50 comprend des pièces planes rigides 53, 54, 55, 56, ici au nombre de quatre et s'étendant par paire de part et d'autre des premier et second éléments 20, 30, parallèlement à l'axe longitudinal X.

Ainsi, deux pièces planes rigides 53, 54, également appelées manilles, s'étendent d'un premier côté des premier et second éléments 20, 30, et deux autres pièces planes rigides 55, 56, également appelées manilles, s'étendent de l'autre côté des premier et second éléments 20, 30.

La disposition de deux pièces planes rigides 53, 54 et 55, 56 de part et d'autre des premier et second éléments 20, 30 a pour fonction d'assurer une liaison rigide redondante, de manière à assurer une sécurité pour la transmission des efforts (le système présente ainsi une sécurité aux défaillances, également appelé "*Fail Safe"* en terminologie anglo-saxonne).

Ainsi, en cas de rupture de l'une des pièces planes rigides 53, 54, 55, 56, la transmission des efforts peut être réalisée par les pièces planes rigides restantes.

Bien entendu, en cas rupture de la liaison souple assurée par les premier et second éléments 20, 30 reliés par la structure tubulaire emboitée 22, 32, 41, 42, 43, le dispositif de liaison 2 est apte à assurer une liaison mécanique rigide grâce aux pièces planes rigides 53, 54, 55, 56 disposées de part et d'autre de la structure souple.

Chaque pièce plane rigide 53, 54, 55, 56 se présente sensiblement sous la même forme, constituée d'une structure de plaque allongée ayant respectivement à chaque extrémité un alésage 53a, 54a, 55a, 56a et 53b, 54b, 55b, 56b destiné au montage des pièces planes rigides 53, 54, 55, 56 sur les premier et second corps 4, 5.

Dans le mode de réalisation illustré aux figures 3 et 4, les pièces planes rigides 53, 54, 55, 56 ont des points d'attaches 51, 52 réalisés au niveau des axes d'articulation 23 et 33 décrits précédemment.

Ainsi, les extrémités des pièces planes rigides 53, 54, 55, 56 sont disposées de part et d'autre des bras 21 a, 21 b, 31 a, 31 b des châpes 21, 31 des extrémités de liaison des premier et second éléments 20, 30.

Du côté d'une première extrémité, par exemple l'extrémité 53a, 54a, 55a, 56a des pièces planes rigides 53, 54, 55, 56, l'alésage est circulaire et correspond sensiblement aux dimensions de l'axe d'articulation 23.

En revanche, au niveau des extrémités opposées 53b, 54b, 55b, 56b, l'alésage est formé d'un trou oblong 53c, 54c, 55c, 56c permettant de réaliser le jeu fonctionnel dans la liaison mécanique reliant ces pièces planes rigides 53, 54, 55, 56 à l'axe d'articulation 33 adapté au montage d'un des premier et second corps 4, 5, et ici au montage du turboréacteur 5.

Bien entendu le jeu fonctionnel pourrait être réalisé de manière équivalente également au niveau de l'axe d'articulation 23 reliant le premier corps 4, ici le mat d'accrochage.

Ainsi, au niveau d'un premier point d'attache 51 de la pièce de liaison rigide 50, les trous oblongs 53c, 54c, 55c, 56c permettent un montage avec un jeu fonctionnel de l'axe d'articulation 33.

En fonctionnement, comme illustré à la figure 3, lorsque les charges appliquées au dispositif de liaison 2 restent inférieures à une charge de valeur prédéterminée correspondant aux charges fatigues usuelles appliquées au système, le jeu fonctionnel existant au niveau de l'axe d'articulation 33 permet un déplacement relatif des premier et second éléments 20, 30 par rapport aux pièces planes rigides 53, 54, 55, 56.

Ainsi, les efforts transitent au niveau de cet axe d'articulation 33 au travers de l'ensemble des structures tubulaires emboitées 22, 32, 41, 42, 43.

En revanche, comme bien illustré à la figure 4, lorsque les charges exercées au niveau de l'axe d'articulation 33 dépassent la limite arbitraire fixée, correspondant aux charges fatigues, le jeu fonctionnel est comblé, l'axe d'articulation 33 venant en butée à l'extrémité des trous oblongs 53c, 54c, 55c, 56c des pièces planes rigides 53, 54, 55, 56.

Compte tenu de la rigidité relative des pièces, les efforts sont ainsi transmis à partir de l'axe d'articulation 33 en direction de l'axe d'articulation 23 au travers des pièces planes rigides 53, 54, 55, 56.

Bien entendu, la présente invention n'est pas limitée à ce mode de réalisation.

En particulier, la pièce de liaison rigide 50 peut comporter un tube s'étendant selon l'axe longitudinal X autour des premier et second éléments 20, 30, en remplacement des pièces planes rigides 53, 54, 55, 56.

Ainsi, les premier et second éléments 20, 30 sont logés à l'intérieur d'une structure tubulaire externe présentant au niveau des chapes 21, 31, des extrémités des premier et second éléments 20, 30, un alésage pour le passage des axes d'articulation 23, 33, avec un jeu fonctionnel au niveau d'un des axes d'articulation 23, 33.

## Revendications

1. Dispositif de liaison d'un premier corps (4) à un second corps (5), comprenant :
- un premier élément (20) ayant une extrémité de liaison (21) adaptée à être liée audit premier corps (4) et comportant une première portion tubulaire (22) s'étendant selon un axe longitudinal (X) ; et
- un second élément (30) ayant une extrémité de liaison (31) adaptée à être liée audit second corps (5) et comportant une deuxième portion tubulaire (32) s'étendant selon ledit axe longitudinal (X), dans ladite première portion tubulaire (22) dudit premier élément (20),
- au moins une portion tubulaire complémentaire (41, 42, 43) s'étendant selon ledit axe longitudinal (X), dans ladite première portion tubulaire (22) et autour de ladite deuxième portion tubulaire (32),
- ladite première portion tubulaire (22) et ladite deuxième portion tubulaire (32) étant solidarisées aux extrémités par ladite au moins une portion tubulaire complémentaire, **caractérisé en ce que** ladite première portion tubulaire, ladite deuxième portion tubulaire, et ladite au moins une portion tubulaire complémentaire (41, 42, 43 présentent dans une section transversale audit axe longitudinal (X), une surface (S) de valeur identique.

2. Dispositif de liaison conforme à la revendication 1, **caractérisé en ce qu'**il comprend plusieurs portions tubulaires complémentaires (41, 42, 43) emboîtées les unes dans les autres, lesdites première portion tubulaire (22), deuxième portion tubulaire (32) et portions tubulaires complémentaires (41, 42, 43) étant solidarisées respectivement deux à deux.

3. Dispositif de liaison conforme à l'une des revendications 1 à 2, **caractérisé en ce qu'**il est réalisé en titane ou en alliage métallique à base de nickel.

4. Dispositif de liaison conforme à l'une des revendications 1 à 3, **caractérisé en ce que** ladite extrémité de liaison (21, 31) dudit premier élément (20), respectivement dudit second élément (30), comprend une chape adaptée au montage d'un axe d'articulation (23, 33) avec ledit premier corps (4), respectivement ledit second corps (5).

5. Ensemble composé d'un premier corps, d'un second corps et d'un dispositif de liaison dudit premier corps audit second corps conforme à l'une des revendications 1 à 4, **caractérisé en ce qu'**il comprend en outre une pièce de liaison rigide (50) dudit premier corps (4) audit second corps (5), ladite pièce de liaison rigide (50) étant fixée en deux points d'attache (51, 52) respectivement auxdits premier et second corps (4, 5), l'un desdits premier et second corps (4, 5) étant relié par une liaison mécanique avec un jeu fonctionnel au niveau d'un desdits deux points d'attache (51, 52) de la pièce de liaison rigide (50).

6. Ensemble composé d'un premier corps, d'un second corps et d'un dispositif de liaison dudit premier corps audit second corps conforme à la revendication 5, **caractérisé en ce que** ladite pièce de liaison rigide (50) comprend au moins deux pièces planes rigides (53, 54, 55, 56) s'étendant de part et d'autre desdits premier et second éléments (20, 30), selon ledit axe longitudinal (X).

7. Ensemble composé d'un premier corps, d'un second corps et d'un dispositif de liaison dudit premier corps audit second corps conforme à la revendication 5, **caractérisé en ce que** ladite pièce de liaison rigide (50) comporte un tube s'étendant selon ledit axe longitudinal (X) autour desdits premier et second éléments (20, 30).

8. Ensemble moteur pour aéronef, **caractérisé en ce qu'**il comprend un mât d'accrochage (4) et un moteur (5) monté sur ledit mât (4) au moyen d'un dispositif de liaison (2) conforme à l'une des revendications 1 à 4.

9. Aéronef comprenant au moins un ensemble moteur (1) selon la revendication 8.

## Patentansprüche

1. Vorrichtung zum Verbinden eines ersten Körpers (4) mit einem zweiten Körper (5), enthaltend:
- ein erstes Element (20) mit einem Verbindungsende (21), das geeignet ist, mit dem ersten Körper (4) verbunden zu werden und einen ersten rohrförmigen Abschnitt (22) aufweist, der sich entlang einer Längsachse (X) erstreckt; und
- ein zweites Element (30) mit einem Verbindungsende (31), das geeignet ist, mit dem zweiten Körper (5) verbunden zu werden und einen zweiten rohrförmigen Abschnitt (32) aufweist, der sich in dem ersten rohrförmigen Abschnitt (22) des ersten Elements (20) entlang der Längsachse (X) erstreckt;
- zumindest einen komplementär ausgeführten, rohrförmigen Abschnitt (41, 42, 43), der sich in dem ersten rohrförmigen Abschnitt (22) und um den zweiten rohrförmigen Abschnitt (32) herum entlang der Längsachse (X) erstreckt,
- wobei der erste rohrförmige Abschnitt (22) und der zweite rohrförmige Abschnitt (32) an den Enden über den zumindest einen komplementär ausgeführten rohrförmigen Abschnitt fest verbunden sind,
**dadurch gekennzeichnet, dass**
der erste rohrförmige Abschnitt, der zweite rohrförmige Abschnitt und der zumindest eine komplementär ausgeführte rohrförmige Abschnitt (41, 42, 43) in einem Querschnitt quer zur Längsachse (X) eine Fläche (S) mit gleichem Maß aufweisen.

2. Verbindungsvorrichtung nach Anspruch 1,
**dadurch gekennzeichnet, dass** sie mehrere komplementär ausgeführte rohrförmige Abschnitte (41, 42, 43) aufweist, die ineinander gesteckt sind, wobei der erste rohrförmige Abschnitt (22), der zweite rohrförmige Abschnitt (32) und die komplementär ausgeführten rohrförmigen Abschnitte (41, 42, 43) jeweils paarweise fest verbunden sind.

3. Verbindungsvorrichtung nach einem der Ansprüche 1 bis 2,
**dadurch gekennzeichnet, dass** sie aus Titan oder aus einer Metalllegierung auf Nickelbasis hergestellt ist.

4. Verbindungsvorrichtung nach einem der Ansprüche 1 bis 3,
**dadurch gekennzeichnet, dass** das Verbindungsende (21, 31) des ersten Elements (20) bzw. des zweiten Elements (30) einen Gabelkopf aufweist, der zum Montieren einer Gelenkachse (23, 33) mit dem ersten Körper (4) bzw. dem zweiten Körper (5) angepasst ist.

5. Einheit, die aus einem ersten Körper, einem zweiten Körper und einer Verbindungvorrichtung zum Verbinden des ersten Körpers mit dem zweiten Körper nach einem der Ansprüche 1 bis 4 besteht, **dadurch gekennzeichnet, dass** sie ferner ein Teil (50) zur starren Verbindung des ersten Körpers (4) mit dem zweiten Körper (5) aufweist, wobei das Teil zur starren Verbindung (50) an zwei Befestigungspunkten (51, 52) an dem ersten bzw. zweiten Körper (4, 5) befestigt ist, wobei der eine Körper aus erstem und zweitem Körper (4, 5) über eine mechanische Verbindung mit einem Arbeitsspiel im Bereich eines der beiden Befestigungspunkte (51, 52) des starren Verbindungsteils (50) verbunden ist.

6. Einheit, die aus einem ersten Körper, einem zweiten Körper und einer Vorrichtung zum Verbinden des ersten Körpers mit dem zweiten Körper nach Anspruch 5 besteht,
**dadurch gekennzeichnet, dass** Teil zur starren Verbindung (50) zumindest zwei starre Flachteile (53, 54, 55, 56) aufweist, die sich auf beiden Seiten des ersten und zweiten Elements (20, 30) entlang der Längsachse (X) erstrecken.

7. Einheit, die aus einem ersten Körper, einem zweiten Körper und einer Vorrichtung zum Verbinden des ersten Körpers mit dem zweiten Körper nach Anspruch 5 besteht,
**dadurch gekennzeichnet, dass** das starre Verbindungsteil (50) ein Rohr aufweist, das sich entlang der Längsachse (X) um das erste und zweite Element (20, 30) herum erstreckt.

8. Motorgruppe für Luftfahrzeuge,
**dadurch gekennzeichnet, dass** sie eine Ankopplungsstrebe (4) und einen Motor (5) aufweist, der über eine Verbindungsvorrichtung (2) nach einem der Ansprüche 1 bis 4 an der Strebe (4) montiert ist.

9. Luftfahrzeug mit zumindest einer Motorgruppe (1) nach Anspruch 8.

## Claims

1. Device for connecting a first body (4) to a second body (5), comprising:
- a first element (20) having a connection end (21) adapted for being connected to the said first body (4) and comprising a first tubular portion (22) extending along a longitudinal axis (X) ; and
- a second element (30) having a connection end (31) adapted for being connected to the said second body (5) and comprising a second tubular portion (32) extending along the said longitudinal axis (X), in the said first tubular portion (22) of the said first element (20),
at least one complementary tubular portion (41, 42, 43) extending along the said longitudinal axis (X), in the said first tubular portion (22) and around the said second tubular portion (32), said first tubular portion (22) and said second tubular portion (32) being interlocked at the ends by said at least one complementary tubular portion, **characterized in that** the said first tubular portion, the said second tubular portion, and the said at least one complementary tubular portion (41, 42, 43) have in a section crosswise to the said longitudinal axis (X), a surface (S) of identical value.

2. Connection device according to claim 1, **characterized in that** it comprises several complementary tubular portions (41, 42, 43) fitted into each other, the said first tubular portion (22), second tubular portion (32) and complementary tubular portions (41 42, 43) being interlocked respectively in pairs.

3. Connection device according to one of claims 1 to 2, **characterized in that** it is made of titanium or a nickel-based metal alloy.

4. Connection device according to one of claims 1 to 3, **characterized in that** the said connection end (21, 31) of the said first element (20), respectively of the said second element (30), comprises a clevis adapted for mounting a hinge pin (23, 33) with the said first body (4), respectively the said second body (5).

5. Assembly composed of a first body, a second body and a device for connecting the said first body to the said second body according to one of claims 1 to 4, **characterized in that** it further comprises a rigid piece (50) for connecting the said first body (4) to the said second body (5), the said rigid connecting piece (50) being fastened at two attachment points (51, 52) respectively to the said first and second bodies (4, 5), one of the said first and second bodies (4, 5) being connected by a mechanical linkage with a functional play at one of the said two attachment points (51, 52) of the rigid connecting piece (50).

6. Assembly composed of a first body, a second body and a device for connecting the said first body to the said second body according to claim 5, **characterized in that** the said rigid connecting piece (50) comprises at least two flat rigid pieces (53, 54, 55, 56) extending on both sides of the said first and second elements (20, 30), along the said longitudinal axis (X).

7. Assembly composed of a first body, a second body and a device for connecting the said first body to the said second body according to claim 5, **characterized in that** the said rigid connecting piece (50) comprises a tube extending along the said longitudinal axis (X) around the said first and second elements (20, 30).

8. Engine assembly for an aircraft, **characterized in that** it comprises a mounting pylon (4) and an engine (5) mounted on the said pylon (4) by means of connection device (2) according to one of claims 1 to 4.

9. Aircraft comprising at least one engine assembly (1) according to claim 8.
